# EUROPEAN PATENT SPECIFICATION

(11) **EP 1 075 893 B1**
(45) Date of publication and mention of the grant of the patent: **02.03.2005**
(21) Application number: 00116145.4
(22) Date of filing: 31.07.2000
(51) Int. Cl.: B23P 19/04, B21D 53/74, E06B 3/96, B27M 1/08, B27M 3/00

(54) **Apparatus for producing rectangular frames**
Vorrichtung zur Herstellung von rechteckigen Rahmen
Dispositif pour la fabrication de cadres rectangulaires

(30) Priority: 12.08.1999 IT BO990458
(43) Date of publication of application: 14.02.2001
(73) Proprietor: Raffoni, Giuseppe, 47100 Forli (IT)
(72) Inventor: Raffoni, Giuseppe, 47100 Forli (IT)
(74) Representative: Modiano, Guido, Dr.-Ing.

(56) References cited:
- DE-A- 2 747 314
- DE-A- 19 608 844
- FR-A- 2 674 789
- US-A- 5 611 248
- PATENT ABSTRACTS OF JAPAN vol. 018, no. 636 (M-1715), 5 December 1994 (1994-12-05) & JP 06 246578 A (FUJI SHOJI:KK), 6 September 1994 (1994-09-06)

## Description

The present invention relates to an apparatus for producing rectangular frames.

The strips that compose frames are currently assembled by successive handling operations performed by operators who position the strips and connect them by virtue of appropriately provided fixing machines.

However, conventional assembly methods are slow, work-intensive and expensive because they require an extensive manual work force.

DE-A-2747314 discloses an apparatus for producing rectangular frames as defined in the preamble of claim 1.

DE-A-19608844 discloses a handling apparatus.

The aim of the present invention is to automate the manufacture of frames starting from strips fed on-line, for example, by a cropping machine which cuts them to size from a single section or by a feeder which removes them from one or more magazines in which said strips are stacked.

Within this aim, an object of the present invention is to provide an apparatus which is versatile in use in relation to the possibility to produce frames in different sizes.

This and other objects are achieved with an apparatus for producing rectangular frames composed of strips joined by joining elements, as defined in claim 1.
Further characteristics and advantages will become better apparent from the description that follows on the basis of the accompanying drawings, wherein, by
way of example,
Figure 1 is a perspective view of an apparatus according to a first embodiment;
Figure 1a is a perspective view of the fixing machines;
Figure 2 is a plan view of the apparatus of Figure 1;
Figure 3 is a schematic view of a fixing machine;
Figures 4 and 5 are two perspective views, taken from opposite sides, of a working assembly of the apparatus;
Figures 6 and 7 are two perspective views, taken from opposite sides, of part of the working element of Figures 3 and 4;
Figure 8 is a sectional view, taken along the plane VIII-VIII of Figure 7;
Figure 9 is a perspective view of a second embodiment of the apparatus;
Figures 10 and 11 are two perspective views, taken from opposite sides, of the working element used in the apparatus of Figure 9;
Figure 12 is a perspective view of a third embodiment of the apparatus;
Figures 13 and 14 are two perspective views, taken from opposite sides, of an auxiliary device used in the apparatus of Figure 13;
Figure 15 is a perspective view of a fourth embodiment of the apparatus;
Figure 16 is a perspective view of a fixing machine provided with a device for locking a strip thereon;
Figure 17 is a plan view of the device; and finally
Figures 18 and 19 are two sectional views, taken along the plane XVIII-XVIII of Figure 17, of the device in two different operating situations.

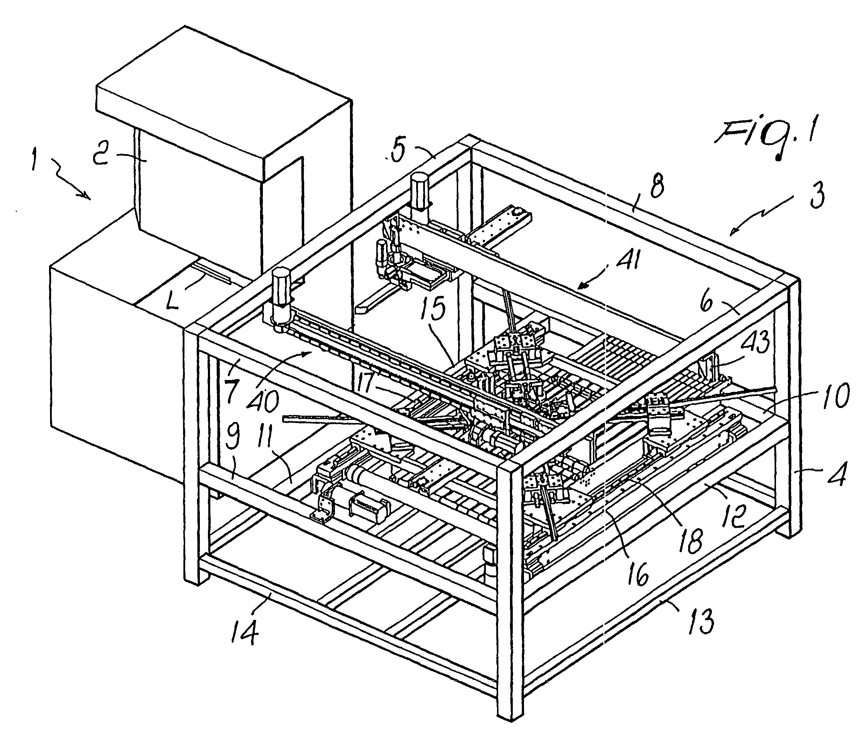

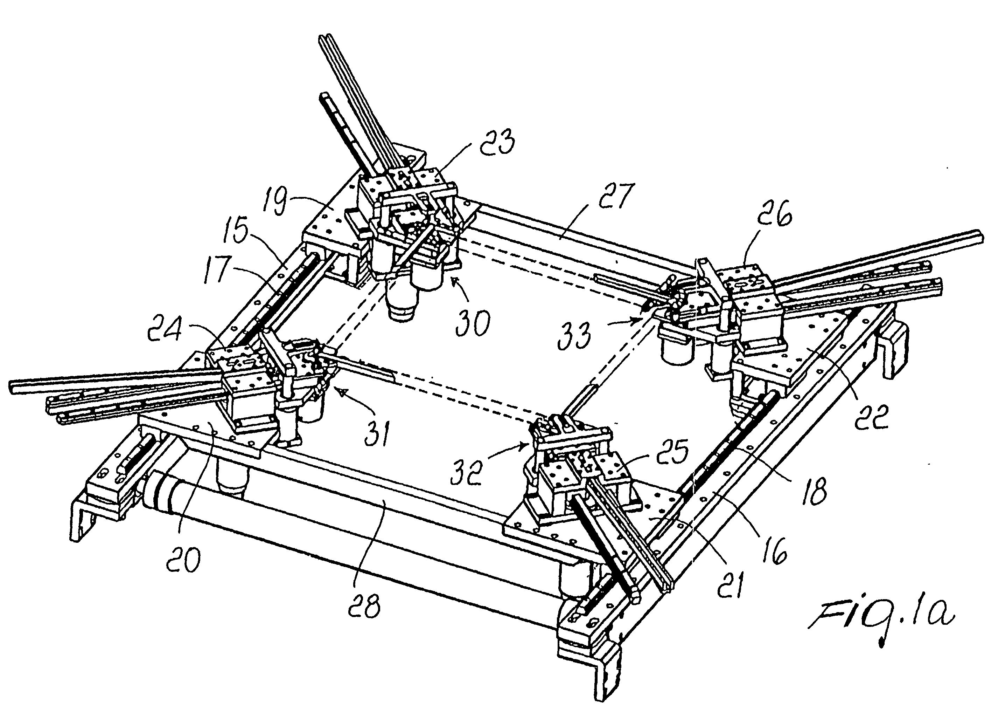

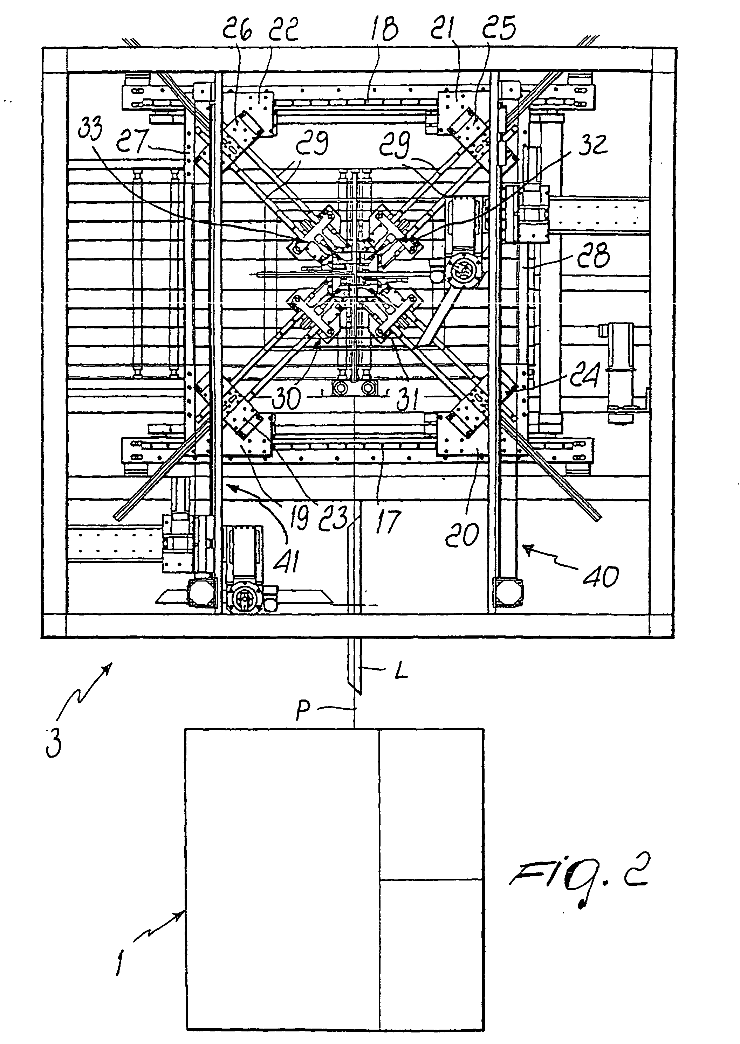

With reference to Figures 1 and 2, 1 designates a generic cropping machine, provided with a cutting head 2 which supplies in output strips L which are cut so as to have two opposite ends beveled at 45°.

The apparatus 3, by means of which the strips L are assembled so as to form a frame, is associated at the output of the cropping machine 1.

The apparatus 3 comprises a prism-shaped footing which is composed of four posts 4 arranged at the corners of a rectangle and connected by cross-members 5, 6 and longitudinal members 7, 8 at the top, by longitudinal members 9, 10 and cross-members 11, 12 halfway along their height, and by a plurality of cross-members 13 which lie between two longitudinal members 14 at the base.

Two respective bars 15, 16 are rigidly coupled to the cross-members 11, 12, and two rails 17, 18 are fixed to said bars; four plates 19, 20, 21, 22 for coupling a matching number of supports 23, 24, 25, 26 can be arranged along said rails. The plates 19-22 are connected in pairs by bars 27, 28 which allow to move the plates 19, 20 simultaneously with respect to the plates 21, 22.

Respective pairs of bars 29 are guided in each one of the supports 23-26 and protrude with a 45° angle with respect to the rails 17, 18. The bars 29 support, in a cantilevered arrangement, four fixing machines 30, 31, 32, 33 arranged at the corners of an imaginary rectangle.

The conventional fixing machines 30-33 are not described in detail except to note (see also Figure 3, which schematically shows a conventional fixing machine) that there is a bracket 34 for supporting the opposite ends of the strips L that will form the frame, an L-shaped element 35 for the abutment and arrangement at 90° on the bracket 34 of the ends that rest thereon, a presser 36 which is guided vertically by means of columns 37 in the bracket 34 and is actuated by a pneumatic actuator 38 in order to clamp the ends arranged against the L-shaped element 34, and a pneumatic actuator 39 which inserts the fixing elements so that they straddle the joints formed between the ends.

In order to transfer and position the strips L supplied by the cropping machine 1, above the fixing machines there are two working assemblies, generally designated by the reference numerals 40 and 41, for picking up the strips from the cropping machine and placing them on the fixing machines 30-33. Since said assemblies are identical in a mirror-symmetrical fashion, only one assembly is described hereinafter for the sake of brevity in description.

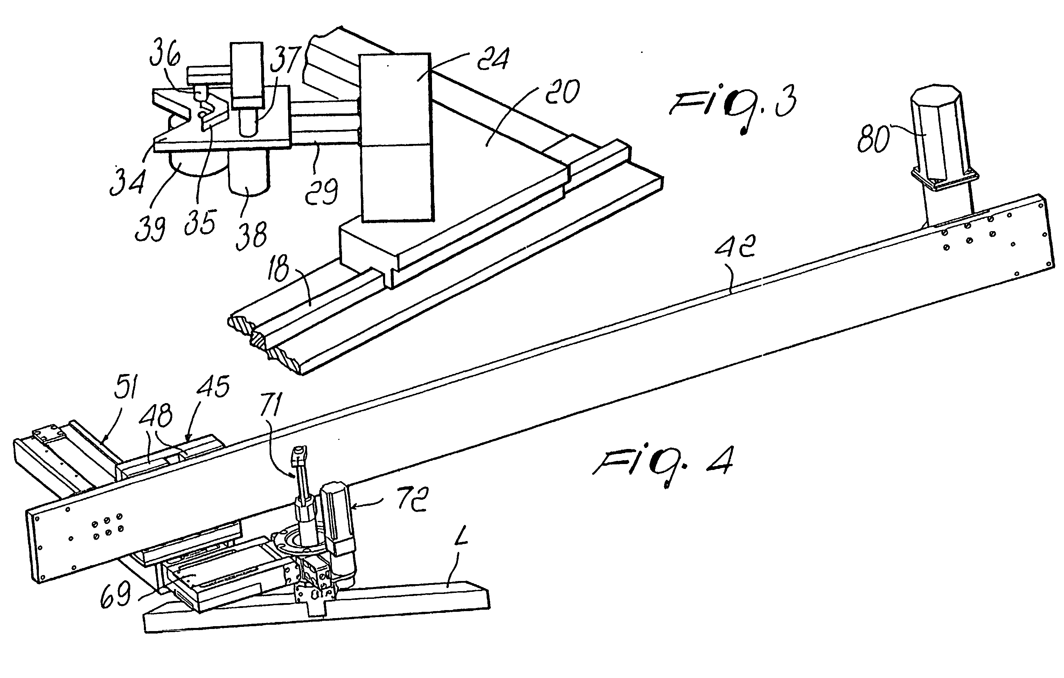

Each assembly comprises (see Figures 4-8) a horizontal beam 42 whose opposite ends are fixed below the cross-members 5 and 6 by virtue of angle elements 43 (see Figure 1).

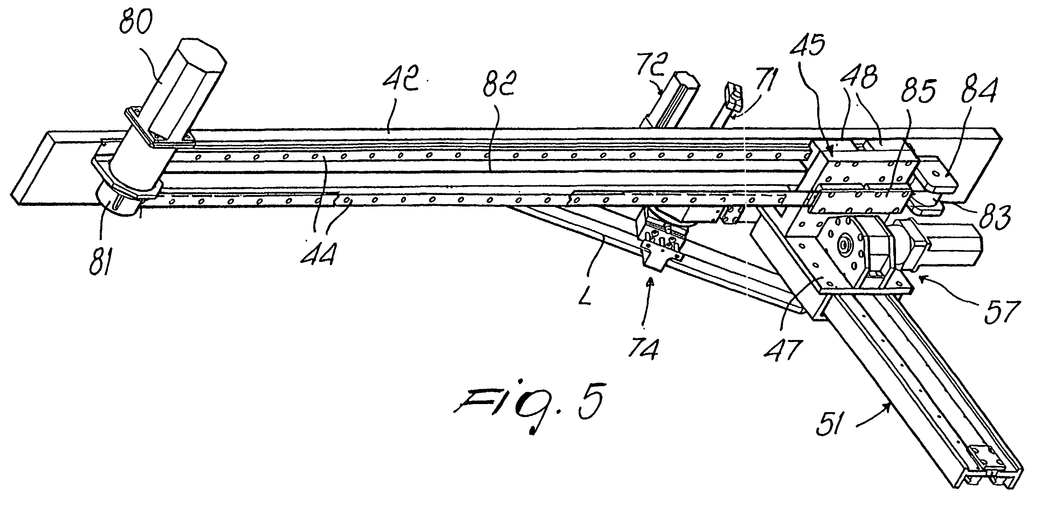

Two parallel rails 44 are fixed to one face of the beam 42, and a carriage 45 is slideable thereon. Said carriage comprises a plate 46, below which a bracket 47 is rigidly coupled; said bracket cantilevers out laterally. Sliding blocks 48 (shown in Figures 4 and 5 but not shown in Figures 6-8) are fixed on the face of the plate 46 that is directed toward the beam 42 and slidingly engage the rails 44. The bracket 47 is provided, in a downward region, with a tubular portion 49 which has a rectangular cross-section and is internally provided with sliding blocks 50 (see Figure 8) for a slider 51. The slider 51 comprises a slideway 52 having a substantially I-shaped cross-section and having, on its lower face, two rails 53 by means of which it slides in the sliding blocks 50.

Two clamps 54, 55 are provided at the opposite ends of the upper face of the slideway 52 and fix the opposite ends of a belt 56 actuated by a motor assembly, generally designated by the reference numeral 57.

Said assembly comprises two flanges 58, 59 which are fixed at right angles to the bracket 47 and between which there is a box-like body 60 which encloses a cavity 61. The cavity 61 is connected to the cavity 62 formed by the tubular portion 49 through an opening 63. Three pulleys 64, 65, 66 are rotatably supported in the cavity 61, and the belt 56 winds around them: the pulley 64 is keyed to the shaft 67 of a reversible gearmotor 68 which is fitted so as to cantilever out on the flange 59, while the pulleys 65, 66 can rotate freely under the pulley 64 so as to protrude into the cavity 62 with a peripheral sector. The pulleys 65, 66 are arranged, with respect to the pulley 64, so that the belt 56 winds around the pulleys 64-66 so as to follow an omega-shaped path. Accordingly, when the gearmotor 68 is actuated the slider 51 is slideable within the sliding blocks 50 at right angles to the beam 42.

When the working assembly is fitted on the beam 42, the carriage 45 is arranged to one side of said beam and the slider 51 has an end which protrudes from the opposite side. An arm 69 is rigidly coupled to said end, lies at right angles to the slider and supports a plate 70. The cylinder of a pneumatic jack 71 is fixed to the center of the plate 70 and a motor 72 is fixed to a block arranged laterally to the plate by means of an angle element. Both the jack 71 and the motor 72 have a vertical axis.

The stem of the jack 71 extends downwards below the plate 70 and is rotationally coupled, but can slide axially, in a pulley 73 which is rotatably supported below the plate 70. At its lower end, the stem has an engagement element 74 which comprises a pneumatic actuator 75, which actuates two engagement jaws 76 (see Figure 6) and 77 (see Figure 7) which are shaped so as to engage the sides of a strip L.

The output shaft of the motor 72 protrudes below the plate 70 and a driving pulley 78 is keyed thereon. A belt 79 winds around the pulleys 78 and 73, so that by actuating the motor 72 it is possible to turn the stem of the jack 71 and orientate the strip L engaged between the jaws 76, 77.

In order to move the carriage 45 along the beam 42, there is a gearmotor 80 (see Figures 4 and 5) which is mounted at one end of the beam. A pulley 81 is keyed to the output shaft of the gearmotor 80, and a belt 82 is wound around it. The belt 82 runs parallel to the beam 42 on the side of the carriage 45 and is closed in a loop around a pulley 83 which is supported by a bracket 84, fixed to the opposite end of the beam 42, which lies opposite the motor 48. The belt 82 comprises a portion which lies between the plate 46 of the carriage 45 and the beam 42 and between the sliding blocks 48 by means of which the carriage is guided on the rails 44. The second portion of the belt 82 is fixed to a clamp 85 rigidly coupled on the front of the plate 46 of the carriage 45.

As shown in Figure 2, the two working assemblies 40, 41 are arranged symmetrically with respect to the line P along which the strips L exit from the cropping machine 1. In practice, the apparatus is substantially symmetrical with respect to a vertical plane that passes through the exit line P.

The operation of the apparatus is evident from Figures 1 and 2.

Any sequence may be used to take the strips L from the cropping machine 1 by means of the working assemblies 40, 41 and transfer and orientate them on the brackets 34 of the fixing machines 30-33 in order to produce a rectangular frame. For example, in said sequence, in a first step a first strip (for example a short strip) may be picked up by a working assembly 40 while the other working assembly 41 is in the standby position. During this first step, the carriage 45 of the first assembly 40 is shifted to the end of the beam 42 that lies proximate to the cropping machine 1. At the same time, the engagement assembly 74 has been turned by the motor 72 so that its jaws 76 and 77 can grip the strip L at the center by descending onto it at the output of the cropping machine through the jack 71.

The strip L, after being gripped by the engagement element 74, is then lifted and transferred onto the brackets 34 of two fixing machines. Lifting is performed by the jack 71 and transfer is performed by actuating the motors 68 and 80. If the strip is to be arranged on two fixing machines arranged at right angles to the beams 42, the strip is turned through 90° by means of the motor 72. Once the strip has been positioned above the bracket by the two fixing machines that are provided, said strip is lowered and deposited by the engagement element 74.

These operations are repeated alternately with one working assembly 40 or with the other working assembly 41 until all four strips have been arranged so as to form a frame. When all the strips have been positioned, they are locked one another by making the brackets 34 move forwards so as to lock the strips against the L-shaped elements 35 and under the pressers 36; finally, said strips are fixed one another by inserting the fixing elements.

It should be noted that the operating steps must be sequenced so that the sliders of the working assemblies 40 and 41 do not interfere with each other along the strip advancement line P.

An important advantage of the above apparatus is that it works autonomously, since it is not necessary to feed the strips by means of a cropping machine; they can be taken in the required dimensions from one or more magazines and fed to the apparatus by a conveyor.

Another advantage of the disclosed apparatus is the possibility to control the working assemblies with an electronic computer which is capable of harmonizing the movements of the carriages, of the sliders and of the engagement assemblies according to the dimensions of the frame to be obtained.

The described apparatus is susceptible of numerous modifications and variations. Figures 9-11 illustrate another embodiment of the pick-up assembly, in which the pulley 64 is rotationally rigidly coupled to, but is slideable axially on, a shaft 86 lying parallel to the beam 42. The shaft 86 is rotatably supported in brackets 87, 88 rigidly coupled to the beam 42 and is actuated by a motor 89 coupled to the bracket 88 by means of a flange.

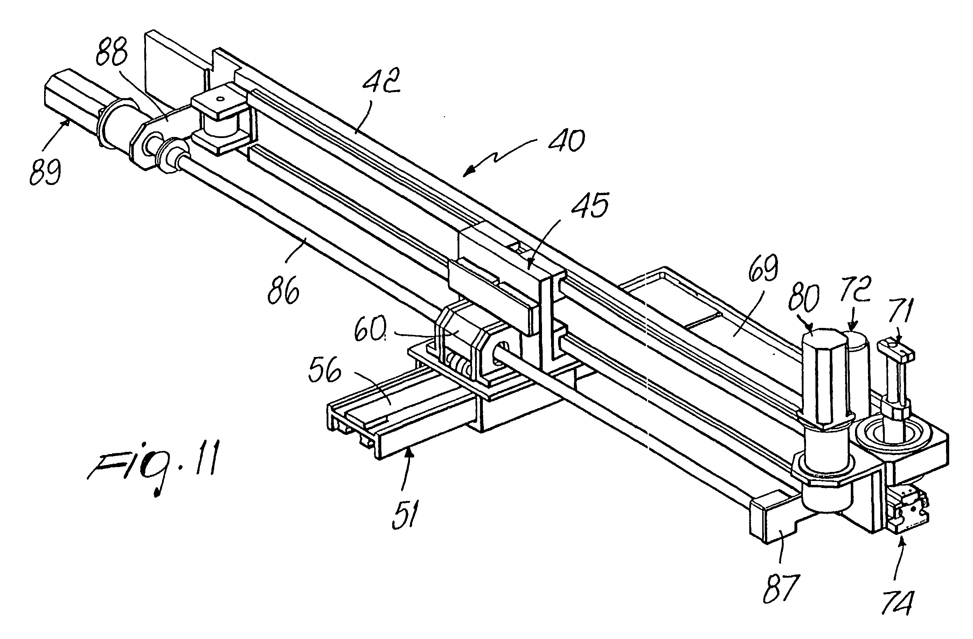

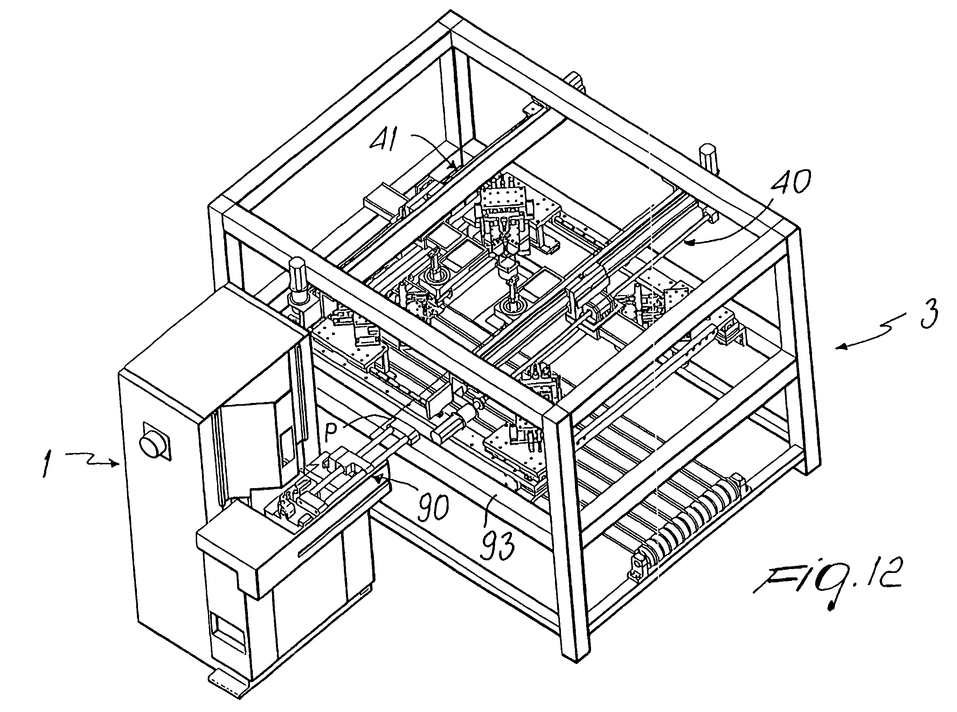

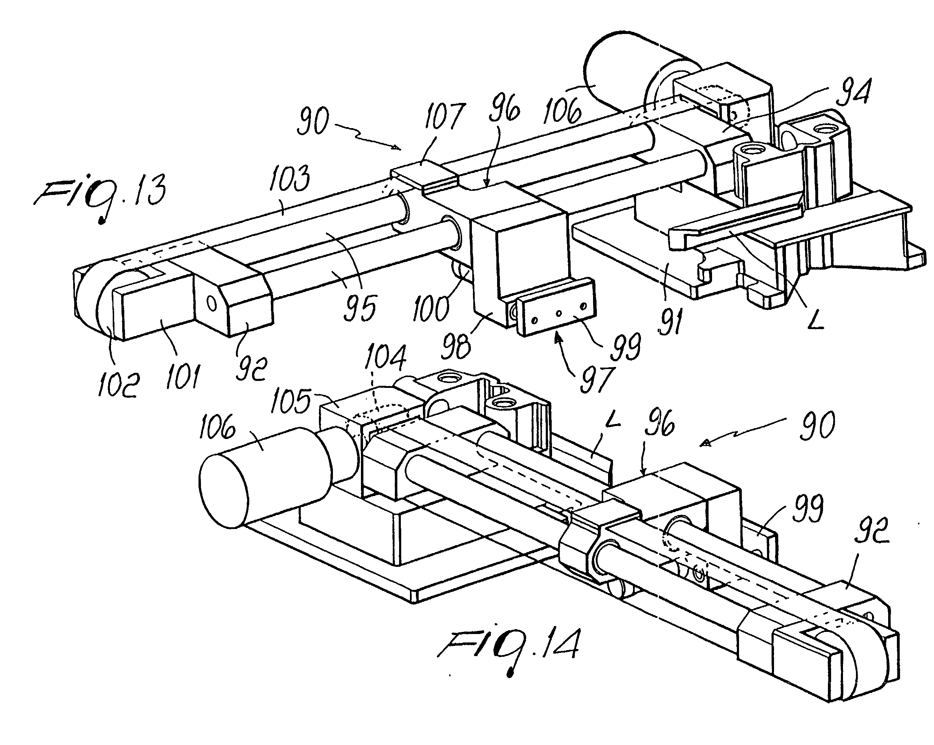

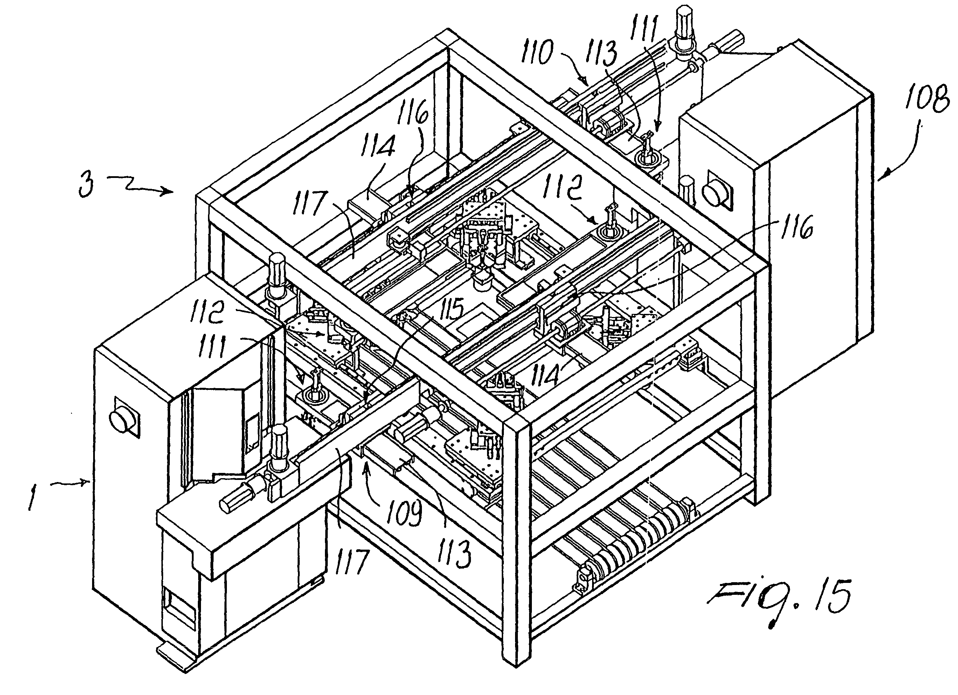

Figures 12-14 illustrate another embodiment of the apparatus of Figure 9-11, in which the strips are transferred from the cropping machine 1 to the pick-and-place assemblies 40, 41 by means of an auxiliary device generally designated by the reference numeral 90.

Said device 90 comprises a base 91 which is fixed to the worktable at the output of the cropping machine 1 and a block 92 which is fixed on a crossmember 93 that connects two posts 4 of the footing. The opposite ends of two parallel bars 95, which are also parallel to the output line P, are rigidly coupled in the block 92 and in an additional block 94 fixed above the base 91, and a carriage 96 is slideable on said bars. The carriage 96 is provided with a strip engagement element 97 similar to the one designated above by the reference numeral 74 and composed of a fixed jaw 98, which is rigidly coupled to the carriage 96, and by a jaw 99 which is movable with respect to the fixed jaw 98 and is actuated by a pneumatic actuator 100.

A fork 101 is rigidly coupled to the block 92, and a pulley 102 is rotatably supported in said fork. A belt 103 is wound around the pulley 102, is parallel to the bars 95 and is closed in a loop around a driving pulley 104 which is rotatable in a support 106 which is fixed to the base 91 and is actuated by a reversible motor 105. The upper and lower portions of the belt 103 lie above and below the blocks 92 and 94 and the carriage 96, while the upper portion is engaged, by means of a clamp 107, with the carriage 96.

As clearly shown, the carriage 96 is moved, by means of the motor 106, from a position in which the engagement element 97 grips a strip at the output of the cropping machine 1 and a position in which the gripped strip is delivered alternately to the grip elements of the working assemblies 40 and 41.

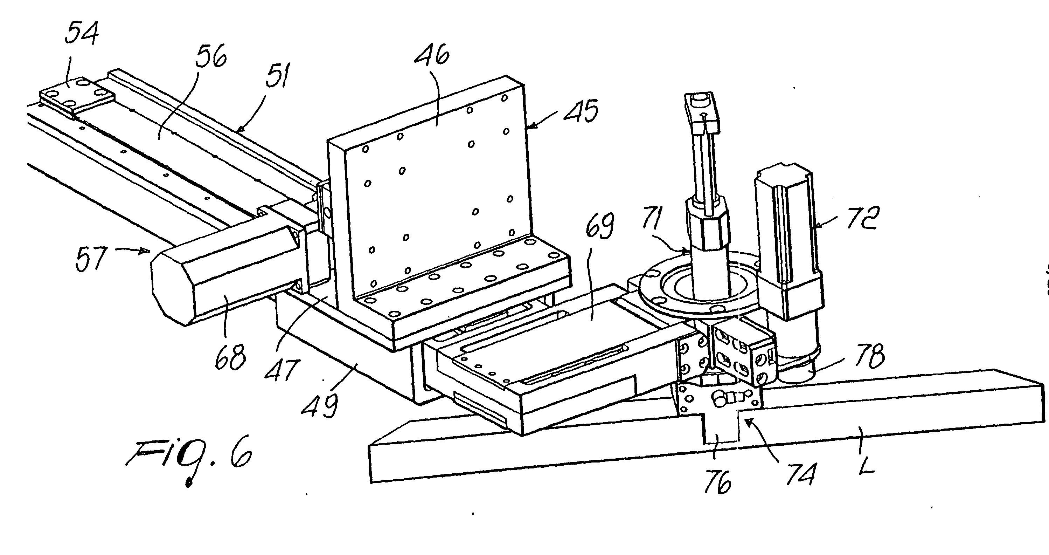

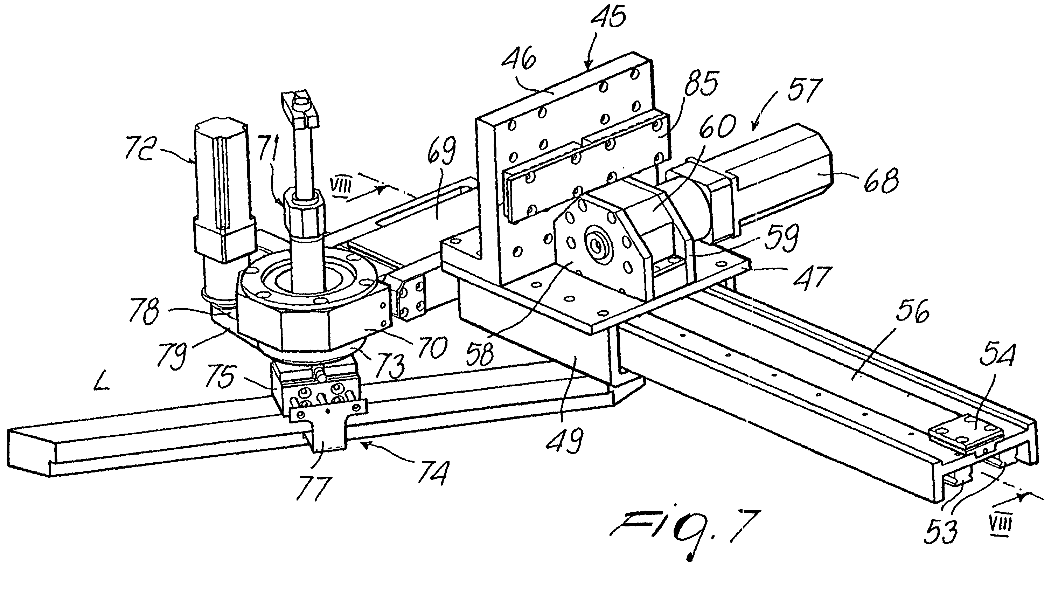

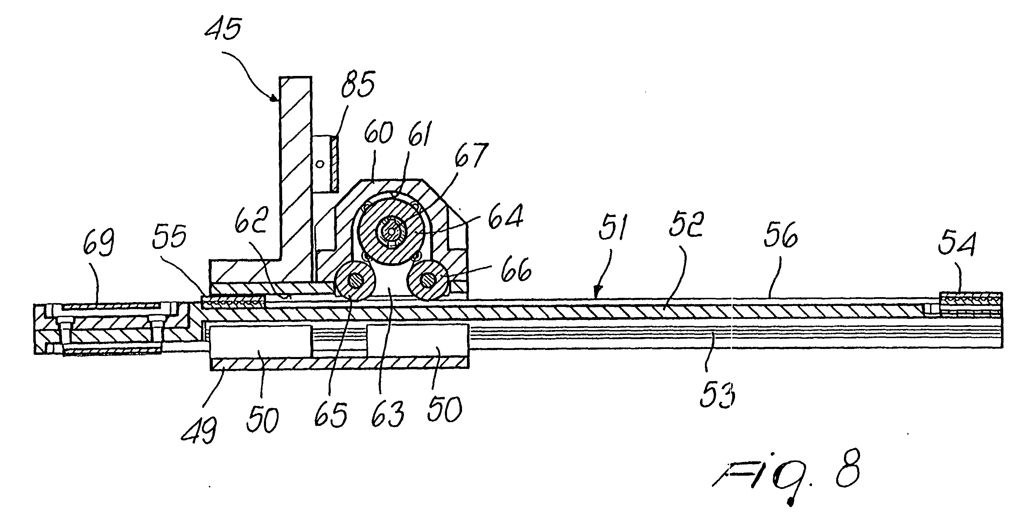

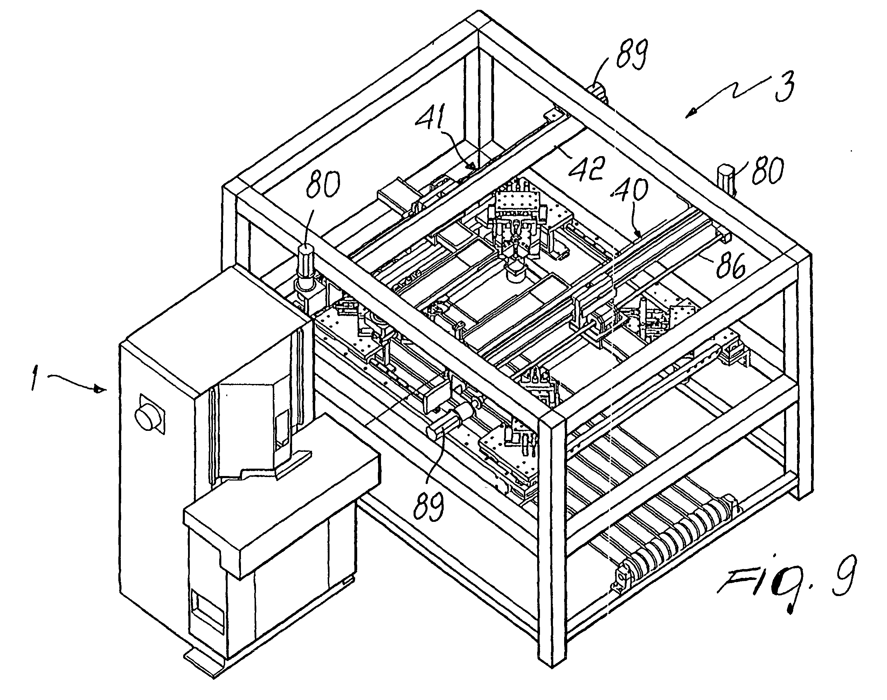

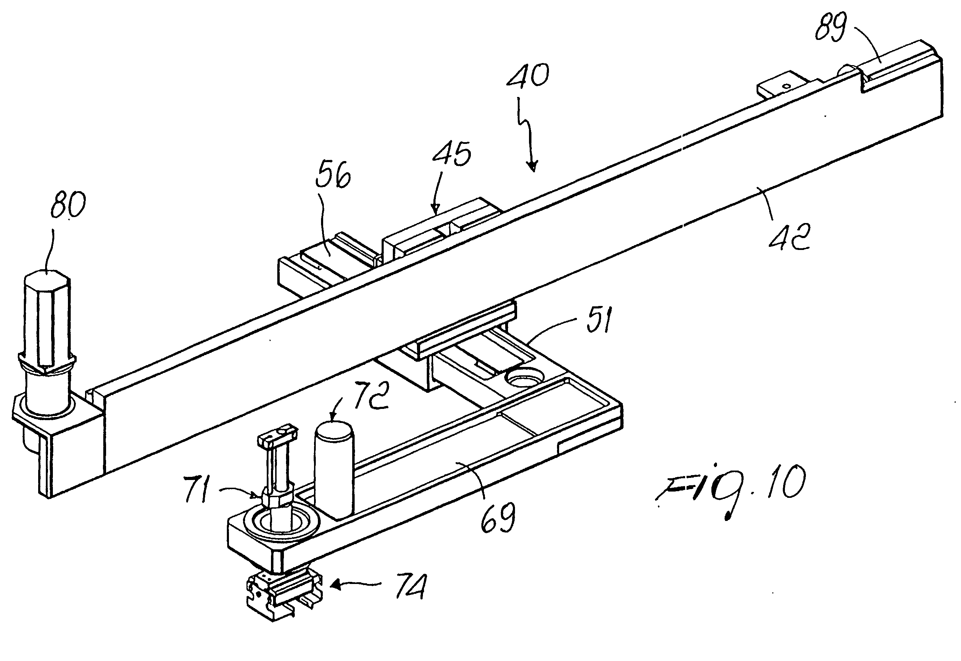

The apparatus shown in Figure 12 is the same one shown in Figure 9 and the working assemblies are of the type shown in Figures 10 and 11. It is evident that the working assemblies can be replaced with the ones shown in Figures 4-8.

Finally, Figure 15 illustrates another embodiment of the apparatus, in which the frame forming strips are taken from two cropping machines 1 and 108, a working assembly 109, 110 being associated with each one of said machines.

Each assembly comprises two grip elements 111, 112 supported by sliders 113, 114 which are slideable on carriages 115, 116 and are moved along a beam 117 as described above in relation to Figures 10 and 11. The grip element 111, 112 of each assembly take two strips every time from the two cropping machines 1 and 108, so as to halve the time required to position the strips on the fixing machines and to prepare the frame.

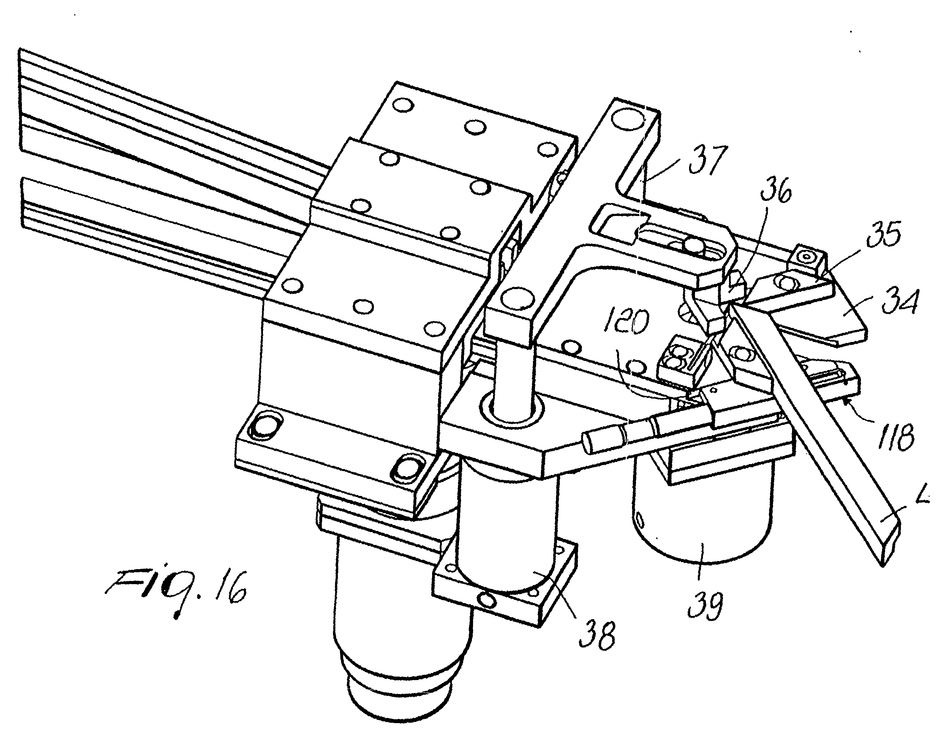

It should be noted that the strips L have an indent for forming the seat which receives the glass of the frame and an optional rear closure panel. Said indent may cause strip stability problems when the engagement elements 74 deposit said strips on the brackets 34 of the fixing machines 30-33. In order to prevent the strips L from tipping over laterally once they are rested on the brackets 34, on each bracket there is a device which locks a strip against the L-shaped element 35. With reference to Figures 16-19, said device, generally designated by the reference numeral 118, comprises a prism-shaped case 119 which is fixed in a recess 120 (see Figure 16) of the bracket 34 laterally to the L-shaped element 35, so that it has an upper face 121 which is co-planar to the plane of the bracket.

The case 119 encloses a compartment 122 in which there are guides 123 for a slider 124 which can be actuated by means of a pneumatic actuator 125 associated with the case 119 and having a stem 126 rigidly coupled to the slider 124 by a key 127.

The slider 124 has a seat 128 in which a lever 129 is articulated in a rocker-like fashion; said lever is actuated so as to turn by a spring 130. Thanks to the spring 130, one arm of the lever 129 protrudes from the case 119 through a slot 131 formed in the upper face of the case. The extent of the protrusion of the arm of the lever from the slot 131 is set by the abutment of the other arm of the lever against the bottom of the seat 128.

The operation of the described device 118 is as follows.

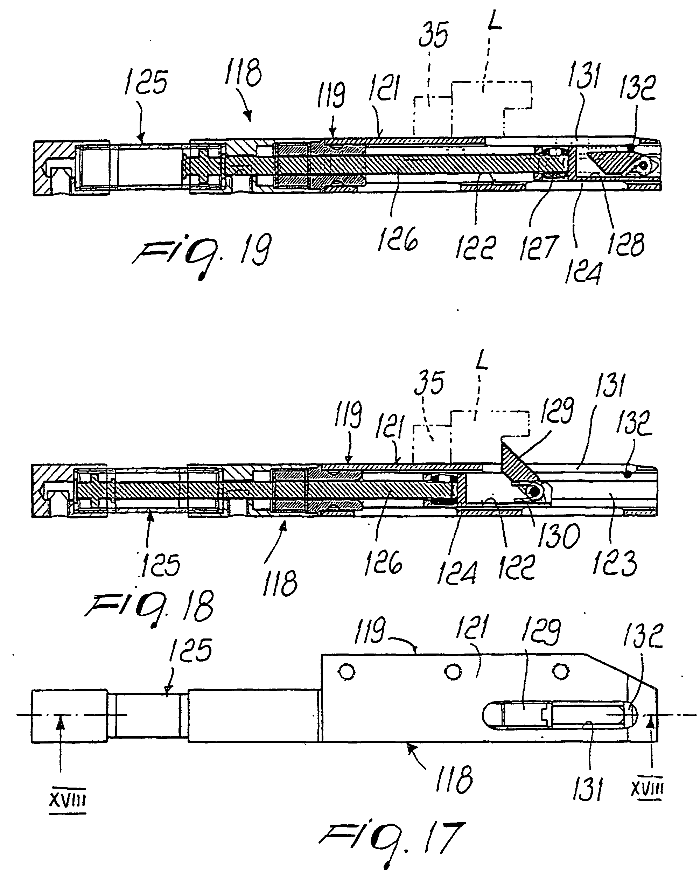

After the strip L, picked up by the assembly 74, has been arranged on the bracket 34 against the L-shaped element 35, and before it is released by the jaws 75 and 76, the actuator 125 moves the slider 124 in the direction along which the lever 129 locks the strip L against the L-shaped element 35, as shown in Figure 18. Once the strip joining operations have been completed, the slider 124 is moved away and the lever 129 is retracted into the seat 128 by abutment on a pin 132 arranged at the end of the slot 131.

The retraction of all the levers 129 into the respective seats 128 allows the completed frame to avoid interfering with said levers during the removal operations, which are normally performed by diagonally spacing apart the fixing machines 30-33, so that the completed frame can descend onto an underlying removal conveyor of the belt type (see Figures 1 and 2).

The invention thus conceived is susceptible of numerous modifications and variations, all of which are within the scope of the appended claims.

All the details may furthermore be replaced with other technically equivalent elements.

In practice, the materials used, so long as they are compatible with the contingent use, as well as the dimensions, may be any according to requirements.

The disclosures in Italian Patent Application No. BO99A000458 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An apparatus for producing rectangular frames composed of strips (L) joined by joining elements inserted by fixing machines so as to straddle the joints formed by the right-angled mating of said strips, said strips being supplied in the intended sizes by a feeder (1), four fixing machines (30-33) being provided which are arranged on a footing at the corners of an ideal rectangle and are provided with means (34, 35) for arranging said strips along the sides of said rectangle, **characterized in that** it comprises at least one working assembly (40, 41) for automatically picking up in succession said strips at the output of said feeder (1) and for placing them on said fixing machines (30-33), so that the ends of two contiguous strips are arranged at right angles on each fixing machine, said working assembly (40, 41) comprising a rail (44), a carriage (45), a supporting beam (42) for the rail (44) for the horizontal sliding of the carriage (45), the latter comprising a guide (49) lying at right angles to said rail, a slider (51) being slideable along said guide so as to slide transversely with respect to the sliding of said carriage and said guide (49) on said rail, said slider articulately supporting, about a vertical axis, a strip engagement element (74), actuation means (80, 52, 72) for actuating said carriage (45), said slider (51) and said engagement element (74) between a position in which said engagement element picks up, in successive steps, the strips (L) that exit from said feeder and a position in which it deposits said strips (L) so that the opposite ends of each strip lie on a pair of fixing machines (30-33) which are not diagonally opposite, said steps being coordinated so as to form a rectangle of strips resting on said fixing machines.

2. The apparatus according to claim 1, **characterized in that** said actuation means for actuating said carriage comprise a belt (82) which is closed in a loop around two pulleys (81, 82) which are supported on said beam (42) at the opposite ends of said rail (44) and actuated by a motor (80), said carriage (45) being coupled to a portion of said belt.

3. The apparatus according to claim 1 or 2, **characterized in that** a pneumatic jack and a motor are supported on said slider (51) and both have a vertical axis, said jack (71) having a stem which protrudes downwards and is rotationally coupled, but axially slideable, with respect to a pulley (73) which is rotatably supported on said slider and is actuated by said motor (72) by means of a belt (79) which is wound around it and on a pulley (78) which is keyed to the output shaft of said motor, an engagement element (74) being supported at the lower end of said stem.

4. The apparatus according to one of the preceding claims 1 to 3, **characterized in that** said engagement element (74) comprises an actuator supported at the lower end of said stem and actuates two jaws (76) for engaging said strip (L).

5. The apparatus according to one of claims 1 to 4, **characterized in that** said actuation means for actuating said slider (51) comprise a belt (56) whose opposite ends are fixed to said slider and run around two idler pulleys (65, 66) and a driving pulley (64) supported on said carriage (45) and arranged so as to guide said belt along a substantially omega-shaped path, said driving pulley (64) being keyed on the output shaft (67) of a reversible motor (68) which is mounted on said carriage (45).

6. The apparatus according to one of claims 1 to 4, **characterized in that** said actuation means for actuating said slider (51) comprise a belt (56) whose opposite ends are fixed to said slider and run around two idler pulleys (65, 66) and a driving pulley (64) supported on said carriage (45) and arranged so as to guide said belt along a substantially omega-shaped path, said driving pulley (64) being rotationally rigidly coupled, but axially slideable, with respect to a shaft (86) supported on said beam (42) parallel to said rail (44) and actuated by a reversible motor (81) mounted on said rail.

7. The apparatus according to one of the preceding claims, **characterized in that** it comprises two working assemblies (40, 41) which cooperate so as to alternately pick up the strips at the output of said feeder and position them on said fixing machines.

8. The apparatus according to one of the preceding claims, **characterized in that** it comprises a first pair of working assemblies which cooperate so as to alternately pick up the strips at the output of a first feeder and position them on a first pair of fixing machines, and a second pair of working assemblies which cooperate so as to alternately pick up the strips at the output of a second feeder and position them on a second pair of fixing machines.

9. The apparatus according to one of the preceding claims, **characterized in that** said feeder comprises a cropping machine.

10. The apparatus according to one of the preceding claims, **characterized in that** the assemblies for actuating said slider, said carriage and said engagement assembly are controlled by an electronic computer which is adapted to adjust their movements according to the dimensions of the frame to be obtained.

11. The apparatus according to one of the preceding claims, **characterized in that** said means for arranging said strips at right angles comprise a bracket (34) provided with an L-shaped element (35) for the abutment of the ends of said pair of strips, a device (118) being provided on said bracket in order to lock a strip against said L-shaped element.

12. The apparatus according to claim 11, **characterized in that** said device (118) comprises a prism-shaped case (119) fixed on said bracket laterally to said L-shaped element (35), said case enclosing a compartment (122) in which a slider (124) is slideable which can be actuated by means of an actuator (125) associated with said slider and provided with a stem (126) which is rigidly coupled to said slider, said slider (124) having a seat (128) in which a lever (129) is articulated and is made to turn by elastic means (130) and has an arm which is adapted to protrude from said case (119) through a slot (131) formed in the upper face thereof, said slider (124) being actuatable between two positions, said arm protruding from said slot (131) in one of said positions in order to lock said strip against said L-shaped element (35), and said arm being arranged, in the other position, inside said seat (128) in order to avoid interfering with said strip when the frame is removed.

## Patentansprüche

1. Vorrichtung zur Herstellung rechteckiger Rahmen, die aus Leisten (L) zusammengesetzt werden, welche durch verbindende Elemente zusammengefügt werden, die durch Befestigungsmaschinen derart eingefügt werden, dass sie die Stoßstellen überbrücken, die durch das rechtwinklige Zusammenpassen der Leisten gebildet werden, wobei die Leisten in den beabsichtigten Größen durch eine Zuführeinrichtung (1) zugeführt werden, wobei vier Befestigungsmaschinen (30 - 33) vorgesehen sind, welche auf einem Sockel an den Ecken eines idealen Rechtecks angeordnet sind und welche Mittel (34, 35) zum Anordnen der Streifen entlang der Seiten des Rechtecks aufweisen,
**dadurch gekennzeichnet, dass**
diese mindestens eine Funktionsanordnung (40, 41) zum automatischen Aufnehmen der Leisten nacheinander am Ausgang der Zuführeinrichtung (1) und zum Anordnen dieser auf den Befestigungsmaschinen (30 - 33) in solcher Weise umfasst, dass die Enden zweier aneinandergrenzender Leisten auf jeder Befestigungsmaschine rechtwinklig angeordnet sind, wobei die Funktionsanordnung (40, 41) umfasst: eine Schiene (44); einen Schlitten (45); einen Stützträger (42) für die Schiene (44) zum horizontalen Verschieben des Schlittens (45), wobei der Letztere eine Führung (49) umfasst, die rechtwinklig zu der Schiene liegt; einen Läufer (51), der entlang der Führung verschiebbar ist, sodass er quer in Bezug auf die Verschiebung des Schlittens und der Führung (49) auf der Schiene gleitet, wobei der Läufer schwenkbar um eine vertikale Achse ein Leistengreifelement (74) hält; Betätigungsmittel (80, 52, 72) zum Betätigen des Schlittens (45), des Läufers (51) und des Greifelements (74) zwischen einer Stellung, in welcher das Greifelement in aufeinanderfolgenden Schritten die aus der Zuführeinrichtung austretenden Leisten (L) aufnimmt, und einer Stellung, in welcher es die Leisten (L) derart ablegt, dass die entgegengesetzten Enden jeder Leiste auf einem Paar von Befestigungsmaschinen (30 - 33) liegen, welche sich nicht diagonal gegenüber liegen, wobei die Schritte derart koordiniert werden, dass ein Rechteck aus Leisten gebildet wird, das auf den Befestigungsmaschinen aufliegt.

2. Vorrichtung nach Anspruch 1,
**dadurch gekennzeichnet,**
**dass** die Betätigungsmittel zum Betätigen des Schlittens einen Riemen (82) umfassen, welcher in einer geschlossenen Schleife um zwei Riemenscheiben (81, 82) herumgeführt ist, die auf dem Träger (42) an entgegengesetzten Enden der Schiene (44) gehalten werden und durch einen Motor (80) angetrieben werden, wobei der Schlitten (45) mit einem Abschnitt des Riemens gekoppelt ist.

3. Vorrichtung nach Anspruch 1 oder 2,
**dadurch gekennzeichnet,**
**dass** eine pneumatische Hebevorrichtung und ein Motor an dem Läufer (51) gehalten werden und beide eine vertikale Achse aufweisen, wobei die Hebevorrichtung (71) einen Schaft aufweist, der nach unten vorragt und bezüglich der Drehung gekoppelt aber axial verschiebbar bezüglich einer Riemenscheibe (73) ist, welche drehbar an dem Läufer gehalten wird und durch den Motor (72) mittels eines Riemens (79) angetrieben wird, welcher um diese sowie um eine Riemenscheibe (78) gewunden ist, die auf der Abtriebswelle des Motors verkeilt ist, wobei ein Greifelement (74) am unteren Ende des Schafts gehalten wird.

4. Vorrichtung nach einem der vorhergehenden Ansprüche 1 bis 3,
**dadurch gekennzeichnet,**
**dass** das Greifelement (74) ein Stellglied umfasst, das am unteren Ende des Schafts gehalten wird und zwei Klemmbacken (76) betätigt, um die Leiste (L) in Eingriff zu nehmen.

5. Vorrichtung nach einem der Ansprüche 1 bis 4,
**dadurch gekennzeichnet,**
**dass** die Betätigungsmittel zum Betätigen des Läufers (51) einen Riemen (56) umfassen, dessen entgegengesetzte Enden an dem Läufer befestigt sind und der um zwei Freilaufriemenscheiben (65, 66) und eine antreibende Riemenscheibe (64) läuft, welche an dem Schlitten (45) gehalten werden und derart angeordnet sind, dass sie den Riemen entlang eines im Wesentlichen omegaförmigen Weges führen, wobei die antreibende Riemenscheibe (64) auf der Abtriebswelle (67) eines auf dem Schlitten (45) montierten Motors (68) mit umkehrbarer Antriebsrichtung verkeilt ist.

6. Vorrichtung nach einem der Ansprüche 1 bis 4,
**dadurch gekennzeichnet,**
**dass** die Betätigungsmittel zum Betätigen des Läufers (51) einen Riemen (56) umfassen, dessen entgegengesetzte Enden an dem Läufer befestigt sind und der um zwei Freilaufriemenscheiben (65, 66) und eine antreibende Riemenscheibe (64) läuft, welche an dem Schlitten (45) gehalten werden und derart angeordnet sind, dass sie den Riemen entlang eines im Wesentlichen omegaförmigen Weges führen, wobei die antreibende Riemenscheibe (64) in Bezug auf eine Welle (86), die an dem Träger (42) parallel zu der Schiene (44) gehalten wird und durch einen an der Schiene montierten Motor (81) mit umkehrbarer Antriebsrichtung angetrieben wird, bezüglich der Drehung starr gekoppelt ist aber axial verschiebbar ist.

7. Vorrichtung nach einem der vorhergehenden Ansprüche,
**dadurch gekennzeichnet,**
**dass** diese zwei Funktionsanordnungen (40, 41) umfasst, die derart zusammenwirken, dass sie abwechselnd die Leisten am Ausgang der Zuführeinrichtung aufnehmen und diese auf den Befestigungsmaschinen anordnen.

8. Vorrichtung nach einem der vorhergehenden Ansprüche,
**dadurch gekennzeichnet,**
**dass** diese ein erstes Paar von Funktionsanordnungen umfasst, die derart zusammenwirken, dass sie abwechselnd die Leisten am Ausgang einer ersten Zuführeinrichtung aufnehmen und diese auf einem ersten Paar von Befestigungsmaschinen anordnen, sowie ein zweites Paar von Funktionsanordnungen, die derart zusammenwirken, dass sie abwechselnd die Leisten am Ausgang einer zweiten Zuführeinrichtung aufnehmen und diese auf einem zweiten Paar von Befestigungsmaschinen anordnen.

9. Vorrichtung nach einem der vorhergehenden Ansprüche,
**dadurch gekennzeichnet,**
**dass** die Zuführeinrichtung eine Scherschneidmaschine umfasst.

10. Vorrichtung nach einem der vorhergehenden Ansprüche,
**dadurch gekennzeichnet,**
**dass** die Anordnungen zum Betätigen des Läufers, des Schlittens und der Greifanordnung durch einen elektronischen Computer gesteuert werden, welcher dazu angepasst ist, deren Bewegungen entsprechend den Abmessungen des zu erzielenden Rahmens anzupassen.

11. Vorrichtung nach einem der vorhergehenden Ansprüche,
**dadurch gekennzeichnet,**
**dass** die Mittel zum Anordnen der Leisten in rechten Winkeln einen Träger (34) umfassen, der mit einem L-förmigen Element (35) zur Anlage der Enden des Paares von Leisten vorgesehen ist, wobei an dem Träger eine Vorrichtung (118) vorgesehen ist, um eine Leiste in Anlage an dem L-förmigen Element festzuhalten.

12. Vorrichtung nach Anspruch 11,
**dadurch gekennzeichnet,**
**dass** die Vorrichtung (118) ein prismenförmiges Gehäuse (119) umfasst, das an dem Träger seitlich des L-förmigen Elements (35) befestigt ist, wobei das Gehäuse ein Fach (122) umschließt, in welchem ein Läufer (124) verschiebbar ist, der mit Hilfe eines Stellglieds (125) betätigt werden kann, welches mit dem Läufer verknüpft ist und einen Schaft (126) aufweist, der starr mit dem Läufer gekoppelt ist, wobei der Läufer (124) eine Aufnahme (128) aufweist, in welcher schwenkbar ein Hebel (129) gelagert ist, wobei durch elastische Mittel (130) dessen Drehung bewirkt wird und wobei dieser einen Arm aufweist, der dazu angepasst ist, aus dem Gehäuse (119) durch einen in der Oberseite desselben ausgebildeten Schlitz (131) hindurch vorzuragen, wobei der Läufer (124) zwischen zwei Stellungen bewegt werden kann, wobei der Arm in der einen Stellung aus dem Schlitz (131) herausragt, um die Leiste in Anlage an dem L-förmigen Element (35) festzuhalten, und wobei der Arm in der anderen Stellung im Inneren der Aufnahme (128) angeordnet ist, um eine Behinderung der Leiste zu vermeiden, wenn der Rahmen entfernt wird.

## Revendications

1. Dispositif pour la fabrication de cadres rectangulaires composés de bandes (L) jointes par des éléments de joints insérés par des machines de fixation de manière à enjamber les joints formés par les appariements à angle droit desdites bandes, lesdites bandes étant fournies dans les tailles voulues par un dispositif d'alimentation (1), quatre machines de fixation (30-33) étant prévues qui sont arrangés sur une fondation aux coins d'un rectangle idéal et sont prévus avec des moyens (34, 35) pour arranger lesdites bandes le long des côtés dudit rectangle, **caractérisé en ce qu'**il comprend au moins un ensemble de travail (40, 41) pour prendre de manière automatique, de manière successive lesdites bandes à la sortie dudit dispositif d'alimentation (1) et pour les placer sur lesdites machines de fixation (30-33), de manière telle que les extrémités de deux bandes contiguës sont arrangées à angle droit sur chaque machine de fixation, ledit ensemble de travail (40, 41) comprenant un rail (44), un chariot (45), une poutre de support (42) pour le rail (44) pour le coulissement horizontal du chariot (45), ce dernier comprenant un guide (49) reposant à angle droit dudit rail, un coulisseau (51) étant coulissable le long dudit guide de manière à coulisser de manière transversale par rapport au coulissement dudit chariot et dudit guide (49) sur ledit rail, ledit coulisseau supportant de manière articulatoire, autour d'un axe vertical, un élément d'engagement de bandes (74), des moyens d'actionnement (80, 52, 72) pour actionner ledit chariot (45), ledit coulisseau (51) et ledit élément d'engagement (74) entre une position dans laquelle ledit élément d'engagement prend, lors d'étapes successives, les bandes (L) qui sortent dudit dispositif d'alimentation et une position dans laquelle il dépose lesdites bandes (L) de manière telle que les extrémités opposées de chaque bande reposent sur une paire de machines de fixation (30-33) qui ne sont pas diagonalement opposées, lesdites étapes étant coordonnées de manière à former un rectangle de bandes restant sur lesdites machines de fixation.

2. Dispositif selon la revendication 1, **caractérisé en ce que** lesdits moyens d'actionnement pour actionner ledit chariot comprennent une courroie (82) qui est fermée dans une boucle autour de deux poulies (81, 82) qui sont supportées sur ladite poutre (42) aux extrémités opposées dudit rail (44) et actionnées par un moteur (80), ledit chariot (45) étant couplé à une partie de ladite courroie.

3. Dispositif selon la revendication 1 ou 2, **caractérisé en ce qu'**un vérin pneumatique et un moteur sont supportés sur ledit coulisseau (51) et tous deux ont un axe vertical, ledit vérin (71) ayant une tige qui est en saillie de manière descendante et est rotationnellement couplée, mais axialement coulissable, par rapport à une poulie (73) qui est supportée de manière rotative sur ledit coulisseau et est actionné par ledit moteur (72) aux moyens d'une courroie (79) qui est enroulée autour et sur une poulie (78) qui est verrouillée sur l'arbre de sortie dudit moteur, un élément d'engagement (74) étant supporté sur l'extrémité inférieure de ladite tige.

4. Dispositif selon l'une des revendications 1 à 3, **caractérisé en ce que** ledit élément d'engagement (74) comprend un actionneur supporté sur l'extrémité inférieure de ladite tige et actionne deux mâchoires (76) pour l'engagement de ladite bande (L).

5. Dispositif selon l'une des revendications 1 à 4, **caractérisé en ce que** lesdits moyens d'actionnement pour actionner ledit coulisseau (51) comprennent une courroie (56) dont les extrémités opposées sont fixées au dit coulisseau et courent autour de deux poulies folles (65, 66) et d'une poulie motrice (64) supportées sur ledit chariot (45) et arrangées de manière à guider ladite courroie le long d'un chemin conformé sensiblement comme un oméga, ladite poulie motrice (64) étant verrouillée sur l'arbre de sortie (67) d'un moteur réversible (68) qui est monté sur ledit chariot (45).

6. Dispositif selon l'une des revendications 1 à 4, **caractérisé en ce que** lesdits moyens d'actionnement pour actionner ledit coulisseau (51) comprennent une courroie (56) dont les extrémités opposées sont fixées au dit coulisseau et courent autour de deux poulies folles (65, 66) et d'une poulie motrice (64) supportées sur ledit chariot (45) et arrangées de manière à guider ladite courroie le long d'un chemin sensiblement de forme en oméga, ladite poulie motrice (64) étant couplée de manière rigide et rotative, mais axialement coulissable, par rapport à un arbre (86) supporté sur ladite poutre (42) parallèle au dit rail (44) et actionnée par un moteur réversible (81) monté sur ledit rail.

7. Dispositif selon l'une des revendications précédentes, **caractérisé en ce qu'**il comprend deux ensembles de travail (40, 41) qui coopèrent de manière à prendre de manière alternée les bandes à la sortie dudit dispositif d'alimentation et à les positionner sur lesdites machines de fixation.

8. Dispositif selon l'une des revendications précédentes, **caractérisé en ce qu'**il comprend une première paire d'ensembles de travail qui coopèrent de manière à prendre de manière alternée les bandes à la sortie d'un premier dispositif d'alimentation et à les positionner sur une première paire de machines de fixation, et une seconde paire d'ensembles de travail qui coopèrent de manière à prendre de manière alternée les bandes à la sortie d'un second dispositif d'alimentation et à les positionner sur une seconde paire de machines de fixation.

9. Dispositif selon l'une des revendications précédentes, **caractérisé en ce que** ledit dispositif d'alimentation comprend une machine de cisaillage.

10. Dispositif selon l'une des revendications précédentes, **caractérisé en ce que** les ensembles pour actionner ledit coulisseau, ledit chariot et ledit ensemble d'engagement sont contrôlés par un ordinateur électronique qui est adapté pour ajuster leur mouvement selon les dimensions du cadre devant être obtenu.

11. Dispositif selon l'une des revendications précédentes, **caractérisé en ce que** lesdits moyens pour arranger lesdites bandes à angle droit comprennent une applique (34) prévue avec un élément en forme de L (35) pour la butée des extrémités de ladite paire des bandes, un dispositif (118) étant prévu sur ladite applique afin de caler une bande contre ledit élément en forme de L.

12. Dispositif selon la revendication 11, **caractérisé en ce que** ledit dispositif (118) comprend un boîtier en forme de prisme (119) fixé sur ladite applique latéralement au dit élément en forme de L (35), ledit boîtier englobant un compartiment (122) dans lequel un coulisseau (124) est coulissable qui peut être actionné aux moyens d'un actionneur (125) associé avec ledit coulisseau et prévu avec une tige (126) qui est rigidement couplé au dit coulisseau, ledit coulisseau (124) ayant un logement (128) dans lequel un levier (129) est articulé et est réalisé de manière à tourner par des moyens élastiques (130) et présente un bras qui est adapté pour être en saillie dudit boîtier (119) à travers une rainure (131) formée dans la face supérieure de celui-ci, ledit coulisseau (124) étant actionnable entre deux positions, ledit bras étant en saillie de ladite rainure (131) dans l'une desdites positions afin de verrouiller ladite bande contre ledit élément en forme de L (35) et ledit bras étant arrangé, dans l'autre position, dans ledit logement (128) afin d'éviter l'interférence avec ladite bande, quand le cadre est enlevé.
